# EUROPÄISCHE PATENTSCHRIFT

(11) **EP 0 630 945 B1**
(45) Veröffentlichungstag und Bekanntmachung des Hinweises auf die Patenterteilung: **09.10.1996**
(21) Anmeldenummer: 94109383.3
(22) Anmeldetag: 17.06.1994
(51) Int. Cl.: C09B 43/30, C09B 69/00, G02F 1/35, C09B 43/26

(54) **Verwendung von verknüpften Azofarbstoffen in der nichtlinearen Optik**
Use of reticulated azo dyes in non-linear optics
Utilisation de colorants azoiques réticulés en optique non linéaire

(30) Priorität: 25.06.1993 DE 4321166
(43) Veröffentlichungstag der Anmeldung: 28.12.1994
(73) Patentinhaber: BASF Aktiengesellschaft, 67063 Ludwigshafen (DE)
(72) Erfinder: Beckmann, Stefan, Dr., D-68167 Mannheim (DE); Etzbach, Karl-Heinz, Dr., D-67227 Frankenthal (DE); Siemensmeyer, Karl, Dr., D-67227 Frankenthal (DE); Sens, Ruediger, D-68165 Mannheim (DE)

(56) Entgegenhaltungen:
- EP-A- 0 211 326
- FR-A- 1 551 378
- FR-A- 1 577 114

## Beschreibung

Die vorliegende Erfindung betrifft die Verwendung von Azofarbstoffen der Formel I,

W (- X- Y- Chr)ₙ (I),

in der
- n: 2 bis 6,
- Y: C₁-C₆-Alkylen,
- Chr: einen Rest, der sich von einem Mono- oder Polyazofarbstoff ableitet und der über eine chemische Bindung, CO-O, Sauerstoff, Schwefel, Imino oder C₁-C₄-Alkylimino an den Rest Y gebunden ist,
- X: einen Rest der Formel CO-O oder O-CO und, wenn W gleich Si ist, auch -O- und
- W: einen n-wertigen Rest, der sich von einem gegebenenfalls substituierten C₂-C₂₀-Alkan, einem gegebenenfalls substituierten C₄-C₇-Cycloalkan, einem gegebenenfalls substituierten Benzol oder einem gegebenenfalls substituierten Naphthalin ableitet, oder, wenn n für 4 steht, auch Silicium bedeuten,
in der nichtlinearen Optik.

Die zur Zeit verwendeten organischen Materialien in der nichtlinearen Optik basieren in der Regel auf funktionalisierten Polymeren. Diese werden im allgemeinen aus entsprechenden niedermolekularen Vorstufen durch radikalische Polymerisation oder Polykondensationen oder auch durch polymeranaloge Reaktionen hergestellt. Um die notwendige Langzeitstabilität in gepoltem Zustand zu erreichen, ist entweder eine hohe Glasstufe oder ein Vernetzungsschritt erforderlich.

Aus EP-A 211 326, FR-A 1577114 und FR-A 1551378 sind Azofarbstoffe bekannt, die zum Färben oder Bedrucken von textilen Materialien verwendet werden.

Nachteilig bei allen bisher in der nichtlinearen Optik verwendeten Materialien ist die relativ schlechte Reproduzierbarkeit der Polymeren. Dies hat zur Folge, daß viele Prozeβparameter, z.B. Polungstemperatur oder Polungsspannung, bei der Herstellung von Vorrichtungen für die nichtlineare Optik in Abhängigkeit von der jeweils verwendeten Charge der Polymeren variiert werden müssen.

Aufgabe der vorliegenden Erfindung war es, Azofarbstoffe zur Verwendung auf dem Gebiet der nichtlinearen Optik aufzufinden.

Demgemäß wurde die Verwendung der eingangs näher bezeichneten Azofarbstoffe der Formel I für die nichtlineare Optik gefunden.

Alle in der obengenannten Formel auftretenden Alkyl- und Alkylengruppen können sowohl geradkettig als auch verzweigt sein.

Wenn in der obengenannten Formel substituierte Phenyl- oder Naphthalingruppen auftreten, können als Substituenten z.B. C₁-C₄-Alkyl, C₁-C₄-Alkoxycarbonyl, C₃-C₄-Alkenyloxycarbonyl, Carboxyl, Chlor, Brom, Nitro oder C₁-C₄-Alkoxy in Betracht kommen. Die Phenylreste weisen dabei in der Regel 1 bis 3 gleiche oder verschiedene Substituenten auf.

Wenn in der obengenannten Formel substituierte Cycloalkylgruppen auftreten, so können als Substituenten z.B. C₁-C₄-Alkyl in Betracht kommen.

Wenn in der obengenannten Formel substituierte Alkylgruppen auftreten, so können als Substituenten z.B. Hydroxy in Betracht kommen.

Reste Y sind z.B. CH₂, (CH₂)₂, (CH₂)₃, (CH₂)₄, (CH₂)₅, (CH₂)₆, CH (CH₃)CH₂ oder CH (CH₃)CH (CH₃).

C₁-C₄-A-kyDimino ist z.B. Methylimino, Ethylimino, Propylimino, Isopropylimino, Butylimino, Isobutylimino oder sec-Butylimino.

Geeignete Verbindungen W(-COOH)ₙ oder deren Ester (X = CO-O) oder W(-OH)ₙ (X = O-CO), die den Azofarbstoffen zugrundeliegen, sind z.B. aliphatische Alkohole, wie Ethan-1,2-diol, Glycerin, Butan-1,2,4-triol, 2-Methyl-2-hydroxymethyl-propan-1,3-diol, 2-Ethyl-2-hydroxymethylpropan-1,3-diol, Butan-1,2,3,4-tetraol, Pentaerythrit, Xylit, Mannit oder Sorbit, aliphatische Carbonsäuren, wie Propan-1,2,3-tricarbonsäure, Butan-1,1,4-tricarbonsäure, Butan-1,2,3,4-tetracarbonsäure, Zitronensäure oder 2-Hydroxynonadecyl-1,2,3-tricarbonsäure, cycloaliphatische Alkohole mit 5- oder 6-Ringgliedern, wie 1,2,3,4-Tetrahydroxycyclopentan,, 1,2,3-Trihydroxycyclohexan, 1,2,4-Trihydroxycyclohexan, 1,3,5-Trihydroxycyclohexan, 1,2,3,4-Tetrahydroxycyclohexan, 1,2,3,5-Tetrahydroxycyclohexan, 1,2,4,5-Tetrahydroxycyclohexan, 1,2,3,4,5-Pentahydroxycyclohexan oder 1,2,3,4,5,6-Hexahydroxycyclohexan, cycloaliphatische Carbonsäuren mit 5- oder 6-Ringgliedern, wie Cyclopentan-1,2,3-tricarbonsäure, Cyclopentan-1,2,4-tricarbonsäure, 2-Methylcyclopentan-1,2,3-tricarbonsäure, 3-Methylcyclopentan-1,2,4-tricarbonsäure, Cyclopentan-1,1,2,2-tetracarbonsäure, Cyclopentan-1,2,2,4-tetracarbonsäure, Cyclopentan-1,1,3,3-tetracarbonsäure, Cyclopentan-1,2,3,4-tetracarbonsäure, Cyclopentan-1,2,3,4,5-penta-carbonsäure, Cyclohexan-1,1,4-tricarbonäure, cyclohexan-1,2,4-tricarbonsäure, Cyclohexan-1,3,5-tricarbonsäure, Cyclohexan-1,1,3,3-tetracarbonsäure, Cyclohexan-1,1,4,4-tetracarbonsäure, Cyclohexan-1,2,3,4-tetracarbonsäure, Cyclohexan-1,2,4,5-tetracarbonsäure, Cyclohexan-1,1,3,3,5-pentacarbonsäure oder Cyclohexan-1,2,3,4,5,6-hexacarbonsäure, oder Benzol- oder Naphthalinderivate, wie 1,2-Dihydroxybenzol, 1,3-Dihydroxybenzol, 1,4-Dihydroxybenzol, 1,2,3-Trihydroxybenzol, 1,2,4-Trihydroxybenzol, 1,3,5-Trihydroxybenzol, 1,2,3,4-Tetrahydroxybenzol, 1,2,3,5-Tetrahydroxybenzol, 1,2,4,5-Tetrahydroxybenzol, Hexahydroxybenzol, Phthalsäure, Isophthalsäure, Terephthalsäure, Benzol-1,2,3-tricarbonsäure, Benzol-1,2,4-tricarbonsäure, Benzol-1,3,5-tricarbonsäure, 3,4,5-Trihydroxybenzoesäure, 3,4,5-Trihydroxybenzoesäure-C₁-C₄-alkylester, beispielsweise 3,4,5-Trihydroxybenzoesäuremethylester, 1,2,3-Trihydroxytoluol, 2,4,5-Trihydroxytoluol, 2,4,6-Trihydroxytoluol, 3,4,5-Trihydroxytoluol, Pyromellithsäure, Benzolpentacarbonsäure, Benzolhexacarbonsäure, 1,2,3,4-Tetrahydroxynaphthalin, Naphthalin-1,8-dicarbonsäure, Naphthalin-2,6-dicarbonsäure oder Naphthalin-1,4,5,8-tetracarbonsäure.

Im Falle der Tri-, Tetra-, Penta- oder Hexacarbonsäuren können auch die entsprechenden Anhydride zur Anwendung kommen.

Bevorzugt sind Azofarbstoffe der Formel I, in der W einen n-wertigen Rest, der sich von einem gegebenenfalls durch Hydroxy substituierten C₃-C₆-Alkan, einem gegebenenfalls durch C₁-C₄-Alkyl substituierten Cyclohexan, einem gegebenenfalls durch C₁-C₄-Alkoxycarbonyl, C₃-C₄-Alkenyloxycarbonyl oder Carboxyl substituierten Benzol oder von Naphthalin ableitet, oder, wenn n für 4 steht, auch Silicium bedeutet.

Besonders bevorzugt sind Azofarbstoffe der Formel I, in der W einen n-wertigen Rest, der sich von Glycerin, Pentaerythrit, Mannit, Zitronensäure, 3,4,5-Trihydroxybenzoesaure-C₁-C₄-alkyl-ester oder Pyromellithsäure ableitet, oder, wenn n für 4 steht, auch Silicium bedeutet.

Bevorzugt sind Azofarbstoffe der Formel I, in der n 3 bis 6, insbesondere 3 bis 4, bedeutet.

Beim Rest Chr, der sich von einem Mono- oder Polyazofarbstoff ableitet und der über eine chemische Bindung, CO-O, Sauerstoff, Schwefel, Imino oder C₁-C₄-Alkylimino an den Rest Y gebunden ist, kann diese Verknüpfung zum Rest Y entweder über den Rest der Diazokomponente oder über den Rest der Kupplungskomponente erfolgen. Für den Fall, daß die Verknüpfung über CO-O, Sauerstoff, Schwefel, Imino oder C₁-C₄-Alkylimino erfolgt, sind diese Glieder als zum Chromophor gehörend anzusehen.

Bevorzugt sind auch solche Azofarbstoffe der Formel I, in der Chr über den Rest der Kupplungskomponente an den Rest Y gebunden ist.

Der Rest Chr stellt den Rest eines Azofarbstoffs aus der Klasse der Mono- oder Polyazofarbstoffe, insbesondere aus der Klasse der Mono- oder Disazofarbstoffe dar, wobei Monoazofarbstoffe besonders hervorzuheben sind.

Geeignete Azofarbstoffe, die dem Rest Chr zugrundeliegen, sind an sich bekannt und in großer Zahl beschrieben, z.B. in K. Venkataraman "The Chemistry of Synthetic Dyes", Vol. III, Academic Press, New York, London, 1970.

Von besonderer Bedeutung sind Monoazofarbstoffe mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Monoazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyridothiophen-,Thienothiophen- oder Thienothiazolreihe stammen.

Von besonderer Bedeutung sind weiterhin Monoazofarbstoffe mit einer Kupplungskomponente aus der Anilin-, Aminonaphthalin-, Aminothiazol-, Diaminopyridin- oder Hydroxypyridonreihe.

Von besonderer Bedeutung sind Monoazofarbstoffe der Formel II

D-N= N- K (II),

in der
- D: für einen Rest der Formel 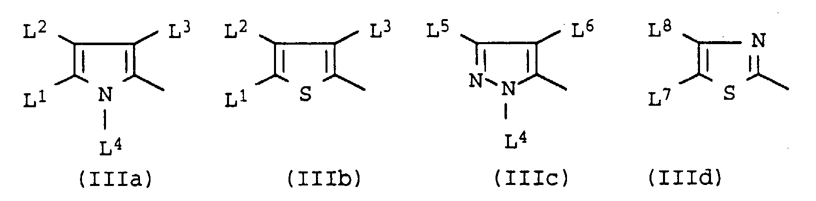 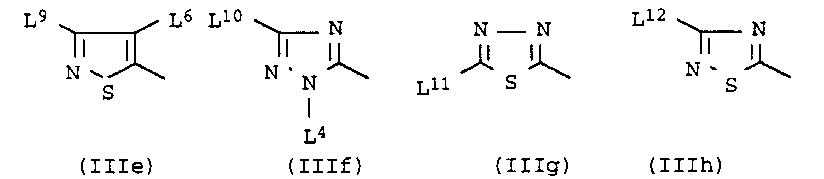 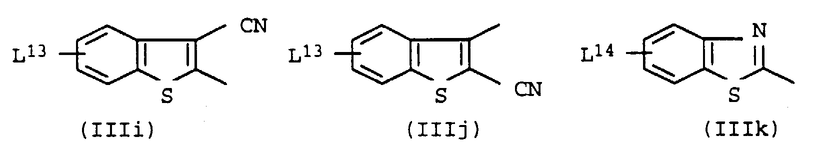 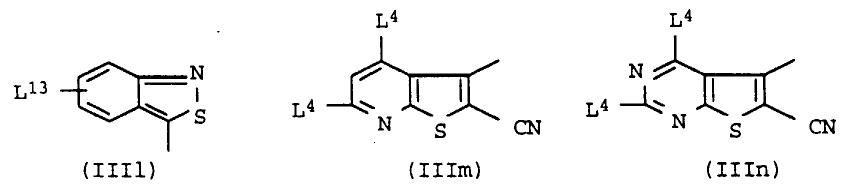 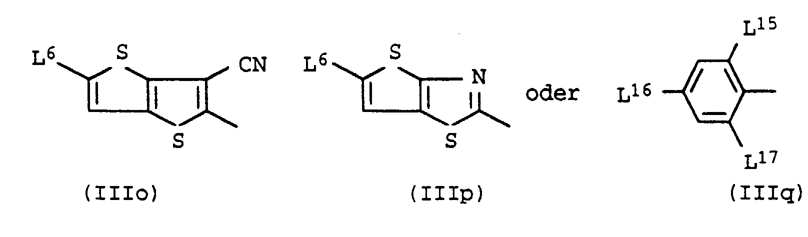 und
- K: für einen Rest der Formel 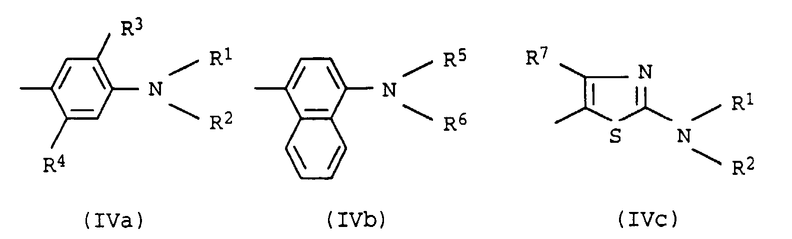 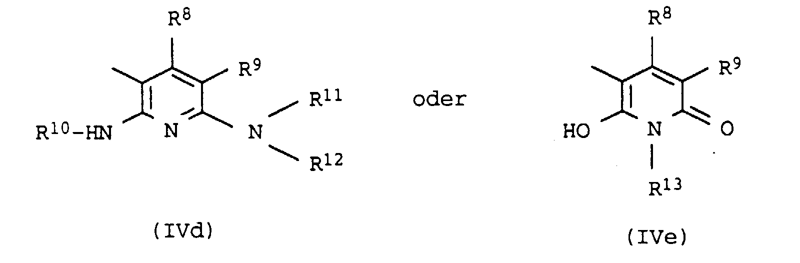
stehen, worin
- L¹: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung besitzt,
- L²: Wasserstoff, C₁-C₆-Alkyl, Halogen, Hydroxy, Mercapto, gegebenenfalls durch Phenyl oder C₁-C₄-Alkoxy sübstituiertes C₁-C₆-Alkoxy, gegebenenfalls substituiertes Phenoxy, gegebenenfalls durch Phenyl sübstituiertes C₁-C₆-Alkylthio, gegebenenfalls sübstituiertes Phenylthio, C₁-C₆-Alkylsulfonyl oder gegebenenfalls sübstituiertes Phenylsulfonyl,
- L³: Cyano, C₁-C₄-Alkoxycarbonyl, Carboxyl oder Nitro,
- L⁴: Wasserstoff, C₁-C₆-Alkyl oder Phenyl,
- L⁵: C₁-C₆-Alkyl oder Phenyl,
- L⁶: Wasserstoff, Cyano, C₁-C₄-Alkoxycarbonyl, Carboxyl, C₁-C₆-Alkanoyl, Thiocyanato oder Halogen,
- L⁷: Nitro, Cyano, C₁-C₆-Alkanoyl, Benzoyl, C₁-C₄-Alkoxyrcarbonyl, Carboxyl, C₁-C₆-ASkylsukfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₆-Alkylthio, gegebenenfalls substituiertes Phenylthio, C₁-C₆-Alky-sukfonyl, gegebenenfalls substituiertes Phenylsulfonyl, C₁-C₄-Alkoxycarbonyl oder Carboxyl,
- L⁹: Cyano, gegebenenfalls durch Phenyl substituiertes C₁-C₆-Alkyl, gegebenenfalls durch Phenyl substituiertes C₁-C₆-Alkylthio, gegebenenfalls substituiertes Phenyl, Thienyl, C₁-C₄-Alkylthienyl, Pyridyl oder C₁-C₄-Alkylpyridyl, .
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₆-Alkylthio oder C₁-C₆-Dialkylamino,
- L¹²: C₁-C₆-Alkyl, Phenyl, 2-Cyanoethylthio oder 2-(C₁-C₄-Alkoxy-carbonyl) ethylthio,
- L¹³: Wasserstoff, Nitro oder Halogen,
- L¹⁴: Wasserstoff, Cyano, C₁-C₄-Alkoxycarbonyl, Carboxyl, Nitro oder Halogen,
- L¹⁵, L¹⁶ und L¹⁷: gleich oder verschieden sind und unabhängig voneinander jeweils Wasserstoff, C₁-C₆-Alkyl, C₁-C₆-Alkoxy, Halogen, Nitro, Cyano, C₁-C₄-Alkoxycarbonyl, Carboxyl, C₁-C₆-Alkylsulfonyl oder gegebenenfalls substituiertes Phenylsulfonyl,
- R¹ und R²: gleich oder verschieden sind und unabhängig voneinander jeweils Wasserstoff, gegebenenfalls substituiertes C₁-C₆- Alkyl, das durch 1 oder 2 Sauerstoffatome in Etherfunktion unterbrochen sein kann, C₅-C₇-Cycloalkyl oder C3-C6-Alkenyl,
- R³: Wasserstoff, C₁-C₆-Alkyl oder C₁-C₆-Alkoxy,
- R⁴: Wasserstoff, C₁-C₆-Alkyl, C₁-C₆-Alkoxy, C₁-C₆-Alkylsulfonylamino, gegebenenfalls sübstituiertes C₁-C₆-Alkanoylamino oder Benzoylamino,
- R⁵ und R⁶: gleich oder verschieden sind und unabhängig voneinander jeweils Wasserstoff oder C₁-C₆-Alkyl,
- R⁷: Wasserstoff, gegebenenfalls substituiertes Phenyl oder Thienyl,
- R⁸: Wasserstoff oder C₁-C₆-Alkyl,
- R⁹: Cyano, Carbamoyl oder Acetyl,
- R¹⁰, R¹¹ und R¹²: gleich oder verschieden sind und unabhängig voneinander jeweils gegebenenfalls sübstituiertes C₁-C₁₂-Alkyl, das durch 1 bis 3 Sauerstoffatome in Etherfunktion unterbrochen sein kann, C₅-C₇-Cycloalkyl, gegebenenfalls sübstituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder R¹¹ und R¹² zusammen mit dem sie verbindenden Stickstoffatom einen 5- oder 6-gliedrigen gesättigten heterocyclischen Rest, der gegebenenfalls weitere Heteroatome enthält, und
- R¹³: Wasserstoff oder C₁-C₆-Alkyl bedeuten.

Von besonderer Bedeutung sind auch Disazofarbstoffe der Formel Va oder Vb 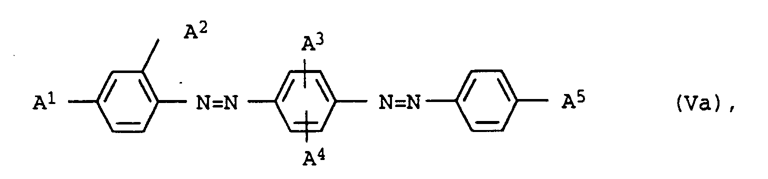 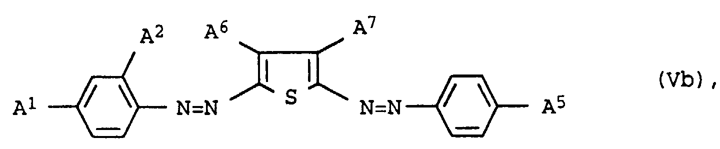 in der
- A¹: Wasserstoff, C₁-C₆-Alkyl, Hydroxy, C₁-C₆-Alkoxy oder Nitro,
- A²: Wasserstoff oder Cyano
- A³ und A⁴: gleich oder verschieden sind und unabhängig voneinander jeweils Wasserstoff, C₁-C₆-Alkyl oder C₁-C₆-Alkoxy,
- A⁵: Wasserstoff, Hydroxy, C₁-C₆-Alkoxy, Amino oder gegebenenfalls durch Cyano sübstituiertes C₁-C₆-Mono- oder Dialkylamino,
- A⁶: Wasserstoff, Methyl oder Chlor und
- A⁷: Cyano, C₁-C₄-Alkoxycarbonyl oder Carboxyl bedeuten.

Alle in den obengenannten Formeln der Azofarbstoffe auftretenden Alkyl- oder Alkenylgruppen können sowohl geradkettig als auch verzweigt sein.

Wenn in den obengenannten Formeln der Azofarbstoffe substituierte Phenylgruppen auftreten, können als Substituenten z.B. C₁-C₄-Alkyl, Chlor, Brom, Nitro oder C₁-C₄-Alkoxy in Betracht kommen. Die Phenylreste weisen dabei in der Regel 1 bis 3 Substituenten auf.

Wenn in den obengenannten Formeln der Azofarbstoffe substituierte Alkylgruppen auftreten, können als Substituenten z.B. Hydroxy, Cyclohexyloxy, Phenoxy, C₁-C₄-Alkoxycarbonyl, C₁-C₄-Alkanoyloxy, Cyano, Cyclohexyl oder Phenyl in Betracht kommen. Die Alkylreste weisen dabei in der Regel 1 oder 2 Substituenten auf.

Reste L², L⁴, L⁵, L⁸, L⁹, L¹¹, L¹², L¹⁵, L¹⁶, L¹⁷, R¹, R², R³, R⁴, R⁵, R⁶, R⁸, R¹⁰, R¹¹, R¹², R¹³, A¹, A³ und A⁴ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L⁹ sind weiterhin z.B. Benzyl oder 1- oder 2-Phenylethyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste A⁵ sind, wie weiterhin auch Reste L², L⁸, L¹⁵, L¹⁶, L¹⁷, R³, R⁴, A¹, A³ und A⁴, z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ sind, wie weiterhin auch Reste L¹, L², L⁸, L¹⁵, L¹⁶, L¹⁷, R¹⁰, R¹¹ und R¹², z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste L³ und A⁷ sind, wie weiterhin auch Reste L⁶, L⁷, L⁸, L¹⁴, L¹⁵, L¹⁶ und L¹⁷, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste L² und L⁸ sind weiterhin z.B. 2-Methoxyethoxy, 2-Ethoxyethoxy, 2- oder 3-Methoxypropoxy, 2- oder 3 -Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste A⁵ sind weiterhin z.B. Methylamino, Ethylamino, Propylamino, Isopropylamino, Butylamino, Pentylamino, Hexylamino, 2-Cyanoethylamino oder Bis(2-cyanoethyl)amino.

Reste L¹¹ und A⁵ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste R¹, R², R¹¹, R¹² und R¹³ sind weiterhin z.B. Cyclopentyl, Cyclohexyl oder Cycloheptyl.

Reste L⁹ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste L¹, L⁶ und L⁷ sind weiterhin z.B. Formyl, Acetyl, Propionyl, Butyryl, Pentanoyl oder Hexanoyl.

Wenn L¹ oder L⁷ für den Rest -CH=T stehen, worin T sich von einer CH-aciden Verbindung H2T ableitet, können als CH-acide Verbindungen H₂T z.B. Verbindungen der Formel 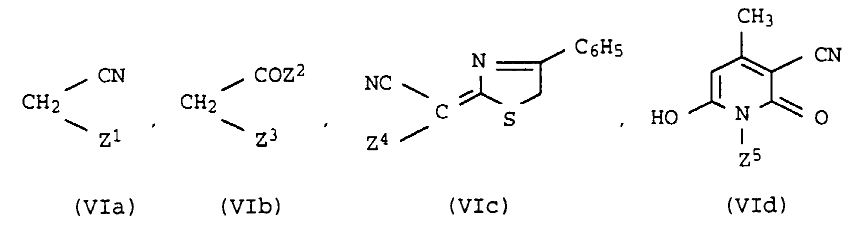 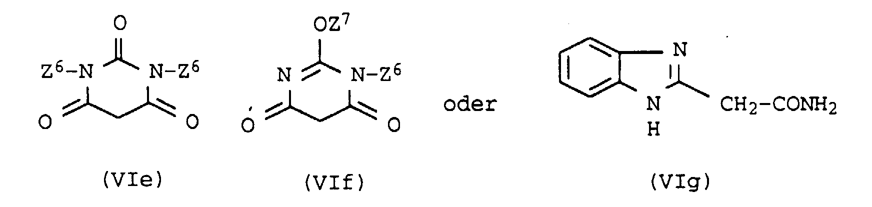 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C3-C4-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest, der sich von Verbindungen der Formel VIa, VIb oder VIc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel VIa, VIb oder VIc ableitet, worin Z¹ Cyano, C₁-C₄-Alkoxycarbonyl oder C₃-C₄-Alkenyloxcarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Reste R¹⁰, R¹¹ und R¹² sind weiterhin z.B. Heptyl, Octyl, 2-Ethylhexyl, Nonyl, Decyl, Undecyl, Dodecyl, 4,7-Dioxanonyl, 4,8-Dioxadecyl, 4,6-Dioxaundecyl, 3,6,9-Trioxaundecyl, 4,7,10-Trioxaundecyl oder 4,7,10-Trioxadodecyl.

Reste R¹, R², R¹⁰, R¹¹ und R¹² sind weiterhin z.B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 2-Hydroxyethyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylalkyl, 2- oder 3-Cyclohexylpropyl, Benzyl, 1- oder 2-Phenylethyl, 2-Acetyloxyethyl, 2-Propionyloxyethyl, 2- oder 3-Acetyloxypropyl, Prop-2-en-1-yl, 2-Methyl-prop-2-en-1-yl, But-2-en-1-yl oder But-3-en-1-yl.

Wenn die Reste R¹¹ und R¹² zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Reste R¹⁰, R¹¹ und R¹² sind weiterhin z.B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzoyl oder 2-, 3- oder 4-Chlorbenzoyl.

Wie oben ausgeführt, kann die Verknüpfung zum Rest Y beispielsweise mittels der in den Azofarbstoffen vorhandenen Carboxyl-, Hydroxy-, Mercapto-, Amino- oder C₁-C₄-Monoalkylaminogruppen erfolgen.

Wie eingangs schon erwähnt, sind die dem Rest Chr zugrunde liegenden Azofarbstoffe an sich bekannt und z.B. in Venkataraman (loc. cit.), in der EP-A-201 896, EP-A-535 590, EP-A-544 153, DE-A-3 108 077, US-A-4 843 153 oder GB-A-1 546 803 beschrieben oder können nach den dort genannten Methoden erhalten werden.

Die Azofarbstoffe der Formel I können nach an sich bekannten Methoden hergestellt werden. Dies sei im folgenden beispielhaft für den Fall eines Monoazofarbstoffs ausgeführt.

Beispielsweise kann man zunächst einen Farbstoff der Formel VIIa 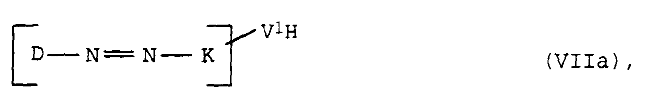 in der D den Rest einer Diazokomponente, K den Rest einer Kupplungskomponente und V¹ Sauerstoff, Schwefel, Imino oder C₁-C₄-Alkylimino bedeuten, mit einer Verbindung der Formel VIIIa oder VIIIb

Hal (-OC)q - Y- Hal (VIIIa)

HO- Y- Hal (VIIIb),

worin Hal Chlor oder Brom und q 0 oder 1 bedeuten und Y jeweils die obengenannte Bedeutung besitzt, umsetzen. Im Fall der Verbindung VIIIa resultiert der Farbstoff der Formel IXa 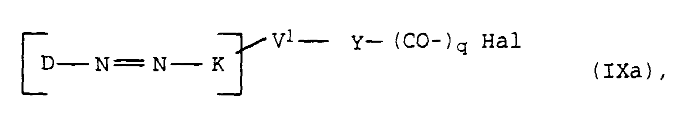 in der D, K, V¹, Y, Hal und q jeweils die obengenannte Bedeutung besitzen, der dann z.B., wenn q 0 bedeutet, mit einer Verbindung der Formel Xa

W(-COOH)ₙ (Xa),

in der n die obengenannte Bedeutung besitzt und W mit Ausnahme von Silicium ebenfalls die obengenannte Bedeutung besitzt, oder wenn q 1 bedeutet, mit einer Verbindung der Formel Xb

W (-OH)ₙ (Xb),

in der n die obengenannte Bedeutung besitzt und W mit Ausnahme von Silicium ebenfalls die obengenannte Bedeutung besitzt, zur Reaktion gebracht werden kann.

(Wie oben bereits ausgeführt, können die Verbindungen der Formel Xa, in der n 3 bis 6 bedeutet, auch in Form ihrer Anhydride zur Anwendung gelangen.)

Wenn W Silicium bedeutet, kann man z.B. Siliciumtetrachlorid mit dem aus der Umsetzung des Farbstoffs VIIa mit der Verbindung VIIIb resultierenden Farbstoff der Formel IXb 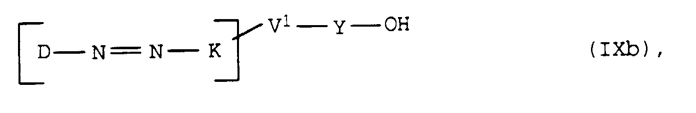 in der D, K, V¹ und Y jeweils die obengenannte Bedeutung besitzen, umsetzen.

Es ist weiterhin auch möglich, einen Farbstoff der Formel VIIb 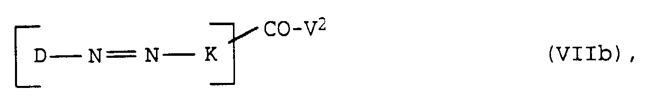 in der V² Hydroxy, Chlor oder Brom bedeutet und D und K jeweils die obengenannte Bedeutung besitzen, zunächst mit einer Verbindung der Formel VIIIc

V³- Y-OH (VIIIc),

in der Y die obengenannte Bedeutung besitzt und V³ Hydroxy oder den Rest Hal(-OC)_{q} bedeutet, worin Hal und q jeweils die obengenannte Bedeutung besitzen, zum Farbstoff der Formel IXc 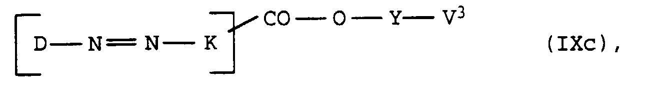 in der D, K, Y und V³ jeweils die obengenannte Bedeutung besitzen, umsetzen und diesen Farbstoff dann, wie oben beschrieben, entweder mit den Verbindungen der Formel Xa oder Xb oder mit Siliciumtetrachlorid zur Reaktion zu bringen.

Wenn der Farbstoffrest Chr über eine chemische Bindung an den Rest Y geknüpft ist, kann man beispielsweise von Monoazofarbstoffen der Formel VIIc oder VIId 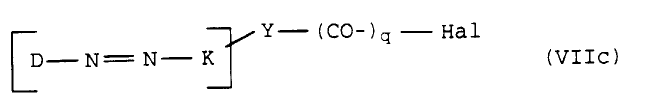 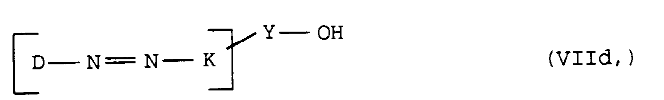 worin D, K, Y, Hal und q jeweils die obengenannte Bedeutung besitzen, ausgehen und die oben aufgeführten Folgeumsetzungen durchführen.

Die Farbstoffe der Formel I weisen eine gute Löslichkeit in organischen Lösungsmitteln auf. Sie erstarren weiterhin glasartig und bilden isotrope amorphe Schichten.

Sie eignen sich in vorteilhafter Weise zur Anwendung in nichtlinear optischen Systemen (siehe beispielsweise Chemistry and Industry, 1. Oktober 1990, Seiten 600 bis 608).

Insbesondere ist hierbei die Eignung der Farbstoffe in der Nachrichtentechnik, in elektrooptischen Modulatoren (z.B. MachZehnder-Interferometer), in optischen Schaltern, bei der Frequenzmischung oder in Wellenleitern hervorzuheben.

Die folgenden Beispiele erläutern die Herstellung von Verbindungen, die sich für die erfindungsgemäße Verwendung eignen:

### Beispiel 1

118,8 g (0,33 mol) des Farbstoffs der Formel 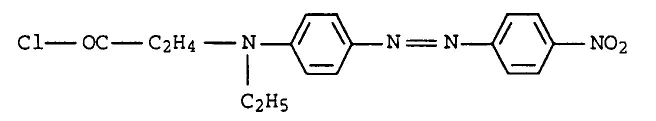 wurden in 500 ml einer Mischung aus Toluol und Pyridin (3:1 v/v) gelöst und zu 19,6 g (0,1 mol) der Verbindung der Formel 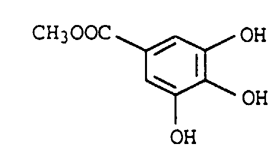 in 200 ml siedendem Toluol getropft. Man erhitzte noch 6 h unter Rückfluß und goß das abgekühlte Reaktionsgemisch auf 500 ml Eiswasser/Salzsäure. Die organische Phase wurde abgetrennt, mit wäßriger Natriumhydrogencarbonatlösung ausgeschüttelt, über Natriumsulfat getrocknet und vom Lösungsmittel befreit. Der Rückstand wurde aus Ethanol/Toluol umkristallisiert.

Man erhielt 87,6 g (25 % d. Th.) des Farbstoffs der Formel 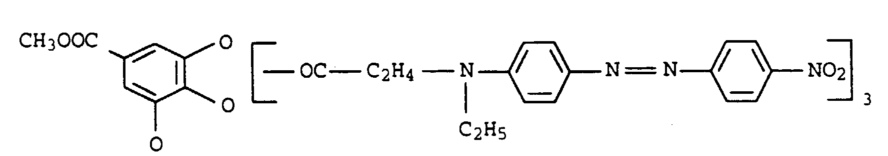 λₘₐₓ (CH₂Cl₂) : 463 nm ; Tg : 149°C

### Beispiel 2

In eine Lösung von 21,8 g (0,1 mol) Benzol-1,2,4,5-tetracarbonsäuredianhydrid in 250 ml Methylenchlorid wurden 69,1 g (0,22 mol) des Farbstoffs der Formel 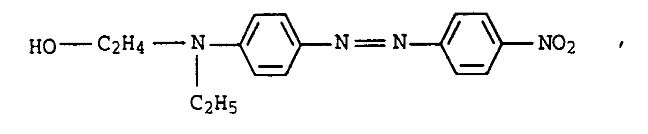 gelöst in 100 ml Methylenchlorid, getropft und die Mischung 4 h unter Rückfluß erhitzt. Danach wurden 12,75 g (0,22 mol) Allylalkohol, 44,9 g (0,22 mol) Dicyclohexyldicarbodiimid und 2,96 g (0,02 mol) 4-Pyrrolidinopyridin zugegeben und 8 h bei Raumtemperatur gerührt. Dann wurde vom gebildeten Niederschlag abfiltriert und das Filtrat eingeengt. Der resultierende Rückstand wurde säulenchromatographisch gereinigt (Kieselgel - Toluol/Eisessig 4:1 v/v).

Man erhielt 19,45 g (21 % d. Th.) eines Isomerengemisches der Farbstoffe der Formel 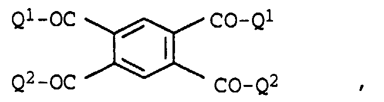 worin jeweils einer der beiden Reste Q¹ und Q² einen Rest der Formel 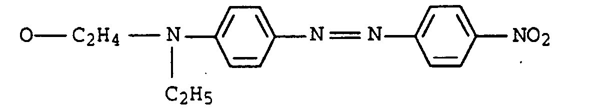 und der andere einen Rest der Formel OCH₂CH=CH₂ bedeutet (λₘₐₓ (CH₂Cl₂) : 446 nm).

### Beispiel 3

In eine Lösung von 16,9 g (0,1 mol) Siliciumtetrachlorid in 200 ml Pyridin wurden bei 0°C 152,25 g (0,44 mol) des Farbstoffs der Formel 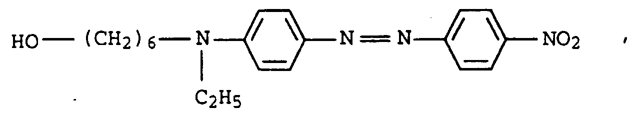 gelöst in 350 ml Pyridin, getropft. Es wurde 6 h bei Raumtemperatur gerührt und dann analog Beispiel 1 aufgearbeitet. Man erhielt 101 g (18 % d. Th.) des Farbstoffs der Formel 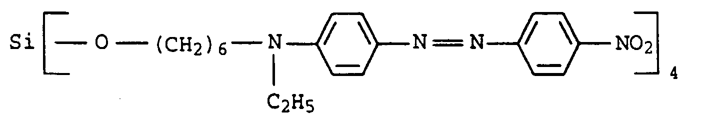 λₘₐₓ (CH₂Cl₂) : 482 nm

### Beispiel 4

26,7 g (0,1 mol) Benzol-1,3,5-tricarbonsäurechlorid wurden in 200 ml Toluol vorgelegt und zum Sieden erhitzt. In diese Mischung wurden 100,5 g (0,32 mol) des Farbstoffs der Formel 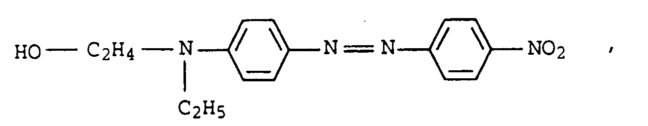 gelöst in 400 ml einer Mischung aus Toluol/Pyridin (3:1 v/v), getropft. Danach wurde 6 h unter Rückfluß erhitzt und dann analog Beispiel 1 aufgearbeitet. Man erhielt 58,35 g (53 % d. Th.) des Farbstoffs der Formel 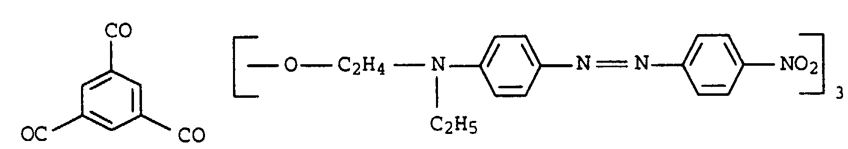 λₘₐₓ (CH₂Cl₂) : 452 nm

## Patentansprüche

1. Verwendung von Azofarbstoffen der Formel I
W (- X- Y- Chr)ₙ (I),
in der
n 2 bis 6,
Y C₁-C₆-Alkylen,
Chr einen Rest, der sich von einem Mono- oder Polyazofarbstoff ableitet und der über eine chemische Bindung, CO-O, Sauerstoff, Schwefel, Imino oder C₁-C₄-Alkylimino an den Rest Y gebunden ist,
X einen Rest der Formel -CO-O- oder -O-CO- und, wenn W gleich Si ist, auch -O- und
W einen n-wertigen Rest, der sich von einem gegebenenfalls substituierten C₂-C₂₀-Alkan, einem gegebenenfalls substituierten C₄-C₇-Cycloalkan, einem gegebenenfalls substituierten Benzol oder einem gegebenenfalls substituierten Naphthalin ableitet, oder, wenn n für 4 steht, auch Silicium bedeuten,
in der nichtlinearen Optik.

2. Verwendung von Azofarbstoffen nach Anspruch 1, dadurch gekennzeichnet, daß n β bis 6 bedeutet.

3. Verwendung von Azofarbstoffen nach Anspruch 1, dadurch gekennzeichnet, daß W einen n-wertigen Rest, der sich von einem gegebenenfalls durch Hydroxy substituierten C3-C6-Alkan, einem gegebenenfalls durch C₁-C₄-Alkyl substituierten Cyclohexan, einem gegebenenfalls durch C₁-C₄-Alkoxycarbonyl, C₃-C₄-Alkenyloxycarbonyl oder Carboxyl substituierten Benzol oder von Naphthalin ableitet, oder, wenn n für 4 steht, auch Silicium bedeutet.

4. Verwendung von Azofarbstoffen nach Anspruch 1, dadurch gekennzeichnet, daß Chr den Rest eines Monoazofarbstoffs bedeutet.

5. Verwendung von Azofarbstoffen nach Anspruch 1, dadurch gekennzeichnet, daß Chr den Rest eines Monoazofarbstoffs mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann, bedeutet.

6. Verwendung von Azofarbstoffen nach Anspruch 1, dadurch gekennzeichnet, daß Chr den Rest eines Monoazofarbstoffs, dessen Diazokomponente sich von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol, Benzthiazol-, Benzisothiazol-, Pyridothiophen-, Pyrimidothiophen-, Thienothiophen- oder Thienothiazolreihe ableitet, bedeutet.

7. Verwendung von Azofarbstoffen nach Anspruch 1, dadurch gekennzeichnet, daß Chr den Rest eines Monoazofarbstoffs, dessen Diazokomponente sich von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe ableitet, bedeutet.

8. Verwendung von Azofarbstoffen nach Anspruch 1, dadurch gekennzeichnet, daß Chr den Rest eines Monoazofarbstoffs, dessen Kupplungskomponente aus der Anilin-, Aminonaphthalin-, Aminothiazol-, Diaminopyridin- oder Hydroxypyridonreihe stammt, bedeutet.

## Claims

1. The use of an azo dye of the formula I
W(-X-Y-Chr)ₙ (I),
where
n is 2 to 6,
Y is C₁-C₆-alkylene,
Chr is a radical which is derived from a mono- or polyazo dye and which is bonded to the radical Y via a chemical bond, CO-O, oxygen, sulfur, imino or C₁-C₄-alkylimino,
X is a radical of the formula -CO-O- or -O-CO- and, if W is Si, is also -O- and
W is an n-valent radical which is derived from an unsubstituted or substituted C₂-C₂₀-alkane, an unsubstituted or substituted C₄-C₇-cycloalkane, an unsubstituted or substituted benzene or an unsubstituted or substituted naphthalene, or, if n is 4, is also silicon, in nonlinear optics.

2. The use of an azo dye as claimed in claim 1, wherein n is 3 to 6.

3. The use of an azo dye as claimed in claim 1, wherein W is an n-valent radical which is derived from a C₃-C₆-alkane which may be substituted by hydroxyl, a cyclohexane which may be substituted by C₁-C₄-alkyl, a benzene which may be substituted by C₁-C₄-alkoxycarbonyl, C₃-C₄-alkenyloxycarbonyl or carboxyl, or from naphthalene, or, if n is 4, is also silicon.

4. The use of an azo dye as claimed in claim 1, wherein Chr is the radical of a monoazo dye.

5. The use of an azo dye as claimed in claim 1, wherein Chr is the radical of a monoazo dye containing a diazo component which is derived from an aniline or from a five-membered aromatic heterocyclic amine which contains one to three hetero atoms, selected from the group consisting of nitrogen, oxygen and sulfur, in the heterocyclic ring and can be fused through a benzene, thiophene, pyridine or pyrimidine ring.

6. The use of an azo dye as claimed in claim 1, wherein Chr is the radical of a monoazo dye whose diazo component is derived from an aniline or from a heterocyclic amine from the pyrrole, furan, thiophene, pyrazole, imidazole, oxazole, isoxazole, thiazole, isothiazole, triazole, oxadiazole, thiadiazole, benzofuran, benzothiophene, benzimidazole, benzoxazole, benzothiazole, benzisothiazole, pyridothiophene, pyrimidothiophene, thienothiophene or thienothiazole series.

7. The use of an azo dye as claimed in claim 1, wherein Chr is the radical of a monoazo dye whose diazo component is derived from an aniline or from a heterocyclic amine from the pyrrole, thiophene, pyrazole, thiazole, isothiazole, triazole, thiadiazole, benzothiophene, benzothiazole, benzisothiazole, pyridothiophene, pyrimidothiophene, thienothiophene or thienothiazole series.

8. The use of an azo dye as claimed in claim 1, wherein Chr is the radical of a monoazo dye whose coupling component originates from the aniline, aminonaphthalene, aminothiazole, diaminopyridine or hydroxypyridone series.

## Revendications

1. Utilisation, dans l'optique non linéaire, de colorants azoïques de formule I
W(-X-Y-Chr)ₙ (I)
dans laquelle
n est un nombre de 2 à 6
Y représente un groupement alkylène en C₁-C₆,
Chr représente un reste qui dérive d'un colorant mono- ou polyazoïque et qui est lié au reste Y par une liaison chimique, CO-O, un atome d'oxygène, de soufre, un reste imino ou alkylimino en C₁-C₄,
X représente un reste de formule -CO-O- ou -O-CO- et, lorsque W est mis pour Si, il représente aussi -O-, et
W représente un reste à n valences qui dérive d'un alcane en C₂-C₂₀ éventuellement substitué, d'un cycloalcane en C₄-C₇ éventuellement substitué, d'un benzène éventuellement substitué ou d'un naphtalène éventuellement substitué ou, lorsque n est mis pour 4, il représente aussi un atome de silicium.

2. Utilisation de colorants azoïques selon la revendication 1, caractérisée en ce que n est un nombre de 3 à 6.

3. Utilisation de colorants azoïques selon la revendication 1, caractàrieée en ce que W est un reste à n valences qui dérive d'un alcane en C₃-C₆ éventuellement substitué par un groupement hydroxy, d'un cyclohexane éventuellement substitué par un reste alkyle en C₁-C₄, d'un benzène éventuellement substitué par un reste (alcoxy en C₁-C₄)carbonyle, (alcényloxy en C₃- C₄) carbanyle ou carboxyle ou de naphtalène ou, lorsque n est mis pour 4, il représente aussi un atome de silicium.

4. Utilisation de colorants azoïques selon la revendication 1, caractérisée en ce que Chr représente le reste d'un colorant monoazoïque,

5. Utilisation de colorants azoïques selon la revendication 1, caractérisée en ce que Chr représente le reste d'un colorant monoazoïque avec un composant de diazoïque qui dérive d'une aniline ou d'une amine aromatique pentagonale hétérocyclique qui comporte, dans le noyau hétérocyclique, un à trois hétéroatomes choisis dans le groupe constitué par l'azote, l'oxygène et le soufre et qui peut etre condensé par un noyau de benzène, de thiophène, de pyridine ou de pyrimidine.

6. Utilisation de colorants azoïques selon la revendication 1, caractérisée en ce que Chr représente le reste d'un colorant monoazoïque dont le composant de diazoïque dérive d'une aniline ou d'une amine hétérocyclique de la série du pyrrole, du furanne, du thiophène, du pyrazole, de l'imidazoie, de l'oxazole, de l'isoxazole, du thiazole, de l'isothiazole, du triazole, de l'oxadiazole, du thiadiazole, du benzofuranne, du benzothiophène, du benzimidazole, du benzoxazole, du benzothiazole, du benzisothiazole, du pyridothiophène, du pyrimidothiophène, du thiénothiophène ou du thiénothiazole.

7. Utilisation de colorants azoïques selon la revendication 1, caractérisée en ce que Chr représente le reste d'un colorant monoazoïque dont le composant de diazoïque dérive d'une aniline ou d'une amine hétérocyclique de la série du pyrrole, du thiophène, du pyrazole, du thiazole, de l'isothiazole, du triazole, du thiadiazole, du benzothiophène, du benzothiazole, du benzisothiazole, du pyridothiophène, du pyrimidothiophène, du thiénothiophène ou du thiénothiazole.

8. Utilisation de colorants azoïques selon la revendication 1, caractérisée en ce que Chr représente le reste d'un colorant manoazoïque dont le composant de copulation provient de la série de l'aniline, de l'aminonaphtalène, de l'aminothiazole, de la diaminopyridine ou de l'hydroxypyridone.
